# EUROPEAN PATENT SPECIFICATION

(11) **EP 1 886 204 B1**
(45) Date of publication and mention of the grant of the patent: **16.11.2011**
(21) Application number: 05745495.1
(22) Date of filing: 10.05.2005
(51) Int. Cl.: G06F 21/20

(54) **TRANSACTION METHOD AND VERIFICATION METHOD**
TRANSAKTIONSVERFAHREN UND VERIFIKATIONSVERFAHREN
PROCEDE DE TRANSACTION ET PROCEDE DE VERIFICATION

(43) Date of publication of application: 13.02.2008
(73) Proprietor: DTS Ltd., Cork (IE)
(72) Inventor: WARD, Scott, MacDonald, NL-2111 GB Aerdenhout (NL); TEL, Teunis, NL-9722 SK Groningen (NL)
(74) Representative: Mertens, Hans Victor
(86) International application number: PCT/NL2005/000353
(87) International publication number: WO 2006/121322

(56) References cited:
- WO-A-00/67143
- WO-A-2004/111751
- GB-A- 2 338 381

## Description

The present invention relates to a transaction method and a verification method for verifying a transaction party.

At present, numerous transactions are being handled by electronic means in digital format. Digital networks have evolved which enable parties of different kind across the world to communicate with each other and to exchange data and information to reach desired transactions.

In transactions, in particular in transactions involving private network access, contractual or financial commitments, settlements and/or payments, each party involved in such a transaction wants to verify any other party, or at least, to be able to track any other party, if after completion of the transaction a problem arises. For such verification purposes, it is known to use personal identifiers, such as passwords, Personal Identification Numbers (PIN), and the like, which are only known to a specific user. However, using personal identifiers over public networks like the Internet, there is a possibility that the personal identifier becomes known to another person, enabling this other person to execute transactions or gain access to digital data presenting himself as somebody else. If a problem arises after completion of the transaction, it is not possible to track the real transaction partner, as its personal identifier may have been used by a malicious user of the public network.

GB 2 338 381 discloses a system for the authentication of transactions over a public network, wherein a terminal sends digitally signed transaction data to a service provider over a public network, together with card application data generated by a smart card. The card application data is sent to an authorization server which checks that the smart card is valid and that the card application data must have been generated by that smart card in the current transaction. User identification information is also sent from the terminal to the service provider and thence to the authorization server, where this information is checked against the correct user details for the smart card. The results of these checks are indicated in a digitally signed authorization response from the authorization server to the service provider, which then determines whether to proceed with the transaction by setting acceptance criteria for the current transaction and determining from the authorization response whether these criteria are met.

For a more secure transaction, it has been proposed in EP 1 219 088 to use a trusted third party transaction server comprising profiles of the transaction parties. The transaction server verifies the identity of the transaction parties by using authentication data comprising a table of random data for verifying a digital signature. The digital signature is generated from a random token using a token reader. The table of random data corresponds to data collected from said random token. Thus, a digital signature originating from the random token and being different for every subsequent transaction is virtually impossible to forge and therefore uniquely identifies the transaction party by the random token used by the transaction party.

WO 2004 111752 discloses a method for performing an electronic transaction. The method provides an electronic device with authentication data and authentication software preferably stored in a secure storage location or other location inaccessible to the user or the operating system of the device. When an authenticating digital signature is requested from a first transaction party associated with the electronic device by a second transaction party, the authentication software is activated to generate said digital signature from the authentication data stored in the secure storage location using transaction specific data, thereby generating a transaction specific digital signature. Next, the digital signature is provided to the second transaction party.

The second transaction party may be storing the authentication data together with identification information of the first transaction party, e.g. because the second transaction party originally provided the authentication data to the first transaction party. Using the transaction specific data, the second transaction party may, like the first transaction party, generate the transaction specific digital signature. A comparison of the received and the generated digital signature enables the second transaction party to verify the identity of the first transaction party.

A consequence of the above-described method of providing a transaction specific digital signature is the fact that the second transaction party holds all data to generate the transaction specific digital signature. Therefore, the second transaction party is enabled to generate a digital signature of the first transaction party, thus enabling fraudulent use. The first transaction party may use this consequence to suggest that the second party used its capability to commit fraud after the transaction, thereby attempting to cause uncertainty whether the first transaction party performed the transaction. Further, any other party may obtain all data illegally from the second transaction party and perform transactions while presenting himself as the first transaction party.

It is an object of the present invention to provide a transaction method and authentication method wherein a transaction party may be verified beyond reasonable doubt.

To reach the above object the present invention provides a method for enabling authentication of a first transaction party of an electronic transaction with a second transaction party, the method comprising installing an electronic device of said first transaction party, the method comprising:
■ providing authentication data in a first memory section of said electronic device such that the authentication data are inaccessible to a user of said electronic device;
■ the second transaction party providing public identification data in a second memory section of said electronic device;
■ generating a secret identification code SIC in the electronic device of the first transaction party;
■ storing the SIC in a third memory section of said electronic device such that the SIC is inaccessible to a user of said electronic device;
■ the second transaction party providing the authentication software to said electronic device, the authentication data and the SIC being accessible to said authentication software;
■ generating a SIC-certificate by encrypting the SIC in the electronic device of the first transaction party;
■ generating a session encryption key from the authentication data using session specific data in the electronic device of the first transaction party;
■ providing the SIC-certificate and at least one of the session encryption key and the session specific data to the second transaction party;
■ the second transaction party storing the public identification data, the SIC-certificate and said at least one of the session encryption key and the session specific data together with the authentication data;
■ encrypting the SIC using the session encryption key thereby generating an encrypted SIC in the electronic device of the first transaction party;
■ providing at least the SIC-certificate and the encrypted SIC to a trusted third party.

The present invention further provides a method for performing an electronic transaction between a first transaction party and a second transaction party, both transaction parties being enabled in accordance with the above method for enabling authentication of one of said transaction parties, the method comprising:
■ activating the authentication software to generate a digital signature from the authentication data;
■ encrypting the digital signature using the SIC as an encryption key thereby generating an encrypted digital signature;
■ providing the digital signature and the encrypted digital signature to the second transaction party.

The present invention further provides a method for verifying a first transaction party having performed an electronic transaction in accordance with the above transaction method, the method comprising:
■ the second transaction party providing the SIC-certificate, the digital signature and the encrypted digital signature, received during the electronic transaction, to the trusted third party; and
■ the trusted third party looking up the SIC corresponding to the SIC-certificate and comparing the digital signature and the encrypted digital signature using said SIC.

The present invention improves the method disclosed in WO 2004 111752. In the methods according to the present invention only the first transaction party holds all data needed to generate the digital signature and the encrypted digital signature.

To generate the encrypted digital signature, the digital signature and the secret identification code (SIC) are used. To generate the digital signature the authentication data and the transaction specific data are used. The authentication data, the SIC-certificate and the transaction specific data may be known to the second transaction party. The second transaction party is thus enabled to verify the digital signature. The secret identification code (SIC) however is only known to the first transaction party and the trusted third party, preventing the second transaction party to generate the encrypted digital signature. The trusted third party is not enabled to generate the digital signature because it does not have the transaction specific data or the authentication data.

If the first transaction party is to be verified, possibly in a transaction or when a dispute arises after a transaction, the second transaction party provides the SIC-certificate, the digital signature, which it already may have validated using the authentication data, and the encrypted digital signature, which it received in the transaction, to the trusted third party. The trusted third party, which has the SIC, may encrypt the digital signature and compare the result with the encrypted digital signature or, similarly, it may decrypt the encrypted digital signature and compare the result with the digital signature. Either way, the trusted third party may determine whether the digital signature is encrypted using the secure identification code SIC of the first transaction party.

In an embodiment, the SIC is divided in an encrypt-SIC and a decrypt-SIC forming a pair like a private and a public key as known in the art. The encrypt-SIC is then used to encrypt the digital signature. Only the first transaction party has the encrypt-SIC. The corresponding decrypt-SIC for decrypting the encrypted digital signature is provided to the trusted third party like the SIC in the above described embodiment of the present invention. Thus, in this embodiment, a part of the data needed to generate the encrypted transaction specific digital signature is only available to the first transaction party. No combination of parties is then enabled to falsely generate the encrypted digital signature.

Below, the present invention is elucidated with reference to diagrams, wherein
DIAGRAM 1A illustrates an installation method for enabling the authentication method according to the present invention;
DIAGRAM 1B illustrates the data available to each party after the installation method of DIAGRAM 1A;
DIAGRAM 1C illustrates the data available to each party after performing an embodiment of the installation method according to the present invention;
DIAGRAM 2 illustrates a transaction method in accordance with the present invention; and
DIAGRAM 3 illustrates an authentication method according to the present invention.
DIAGRAM 1A shows a scheme of actions performed by each party (each column represents the actions of.one party). The row order represents the order of the actions.

Three parties take part in the installation method according to the present invention. A first transaction party and a second transaction party as shown in the left-hand column and the middle column, respectively, intend to perform an electronic transaction. The second transaction party may wish to establish the identity of the first transaction party e.g. because of a payment to be made by the first transaction party. A trusted third party is passively taking part in the installation method. As is described hereinafter, the trusted third party only receives certain data and stores said data.

### DIAGRAM 1A

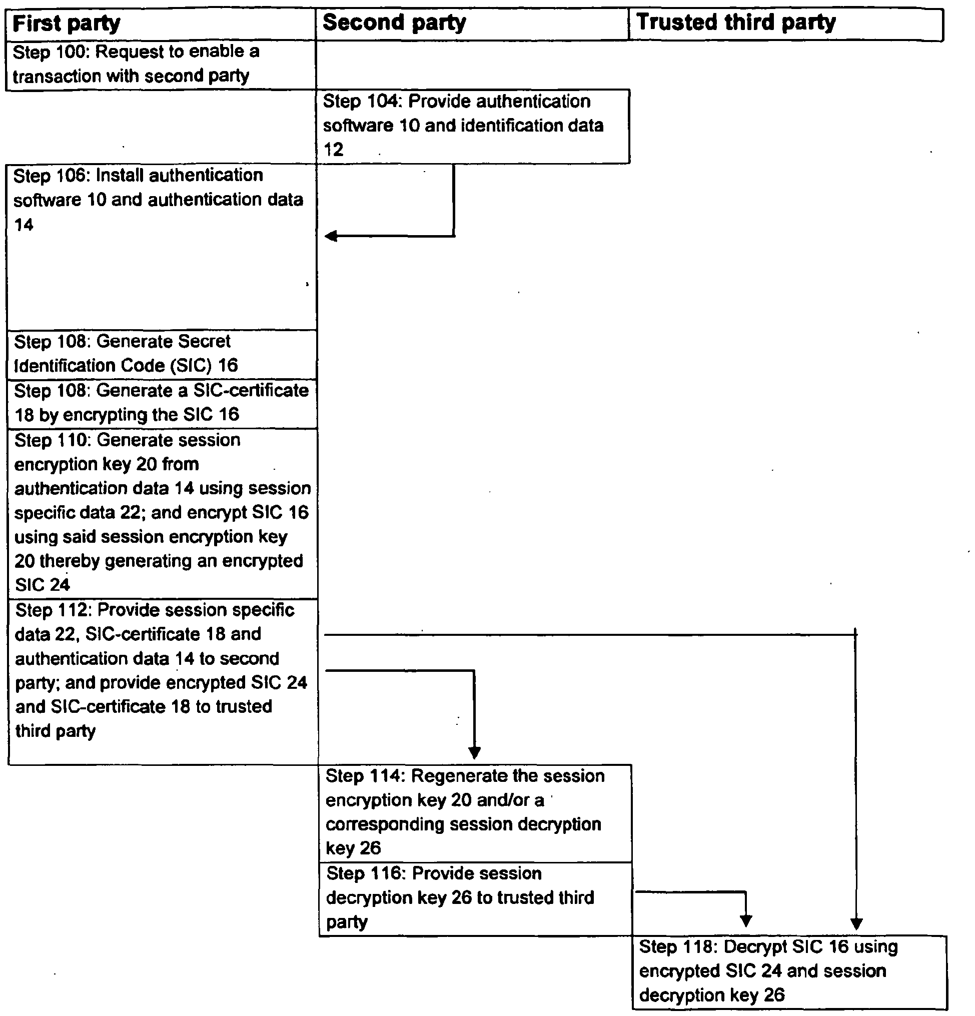

In a first step 100 of the method the first transaction party contacts the second transaction party requesting to become enabled to perform transactions with the second transaction party. In response, in step 104, the second transaction party provides authentication software 10 and identification data 12 to the first transaction party. The identification data 12 comprises a unique combination of characters or the like to enable to identify the first transaction party later from the received identification data 12. The identification data 12 may of course as well be used later in the method for any further purpose, e.g. encryption of data.

After receipt of the authentication software 10 and the identification data 12, the first transaction party installs the authentication software 10 on its electronic device in step 106. During installation of the authentication software 10, a secure memory section is created or accessed such that the user of the device cannot obtain or alter the data stored in said secure memory section. Only the authentication software 10 may access the secure memory section to obtain data therefrom. Such a method and system is known from WO 2004 111752.

In a secure memory section of the electronic device, authentication data 14 is stored. The authentication data 14 may be randomly generated by the first transaction party or may be derived from the identification data 12, for example. In another embodiment, the second party may provide the authentication data 14 together with the identification data 12. If the authentication data 14 is not provided by the second transaction party or is not unambiguously derivable from the identification data 12, the first transaction party provides the authentication data 14 to the second transaction party e.g. in step 112 to be explained below.

In step 106, the first transaction party generates a secret identification code (SIC) 16, possibly initiated by the authentication software 10. The SIC 16 is generated such that the second transaction party cannot obtain or derive the SIC 16 from any of the data the second transaction party has provided or provides to and/or has received or receives from the first transaction party.

Next, in step 108, the first transaction party encrypts the SIC 16 using a predetermined algorithm, thereby generating a SIC-certificate 18. The algorithm is selected such that it is not possible to derive the original SIC 16 from the SIC-certificate 18.

In step 110, the first transaction party generates a session encryption key 20. The session encryption key 20 is generated using the authentication data 14 and session specific data 22. For example, the session specific data 22 may be a session number, a session date, a random number or any other number. Any combination of numbers or characters is as well suitable. A combination of the authentication data 14, identifying the first transaction party, and the session specific data 22, results in a session specific and first transaction party specific encryption key 20. For example, the authentication data 14 is a table of characters and the session specific data 22 are used to select a number of characters from the table, thereby generating a string of characters.

The session encryption key is then employed to encrypt the SIC 16, thereby generating an encrypted SIC 24.

After generating the above mentioned authentication data 14, the SIC 16, the SIC-certificate 18, the session encryption key 20 and the encrypted SIC 24, the first transaction party provides the following data to the second party and the trusted third party in step 112. The second transaction party is provided with the session specific data 22, the authentication data 14 (if necessary as mentioned above), and the SIC-certificate 18. The trusted third party is provided with the SIC-certificate 18 and the encrypted SIC 24. The trusted third party may receive the identification data 12 as well but this is not required.

In step 114 the second transaction party uses the session specific data 22 and the authentication data 14 to regenerate the session encryption key 20 and/or a corresponding session decryption key 26.

The session decryption key 26 is provided to the trusted third party in step 116.

The trusted third party has received from the first transaction party the SIC-certificate 18 and the encrypted SIC 24, and has received from the second transaction party the session decryption key 26. In step 118 the trusted third party uses the session decryption key to decrypt the encrypted SIC to obtain the SIC 16. Thus, the trusted third party may obtain the SIC and the SIC-certificate.

In DIAGRAM 1B it is illustrated which data is available to each party after the installation as described above in relation to DIAGRAM 1A.

### DIAGRAM 1B

| **First party** | **Second party** | **Trusted third party** |
|---|---|---|
| Identification data 12 | Identification data 12 | Identification data 12 |
| Authentication data 14 | Authentication data 14 | |
| Secret Identification Code (SIC) 16 | | Secret Identification Code (SIC) 16 |
| SIC-certificate 18 | SIC-certificate 18 | SIC-certificate 18 |

The first transaction party, shown in the left-hand column, has available the identification data 12, the authentication data 14, the SIC 16 and the SIC-certificate 18. As is described hereinafter, the authentication data 14 and the SIC 16 are necessary for generating a digital signature and for generating an encrypted digital signature to perform an electronic transaction.

The second transaction party has the identification data 12, the authentication data 14 and the SIC-certificate 18 available. The second transaction party does not have access to the SIC 16 and therefore the second transaction party cannot generate a valid encrypted digital signature.

The trusted third party may have access to the identification data 12, which may be publicly available, but has at least access to the SIC 16 and the SIC-certificate 18. Since the trusted third party does not have access to the authorization data 14, the trusted third party cannot generate a valid (encrypted) digital signature.

DIAGRAM 1C illustrates an installation result of a further embodiment of the installation method according to the present invention, wherein the SIC 16 is divided in an encrypt-SIC 16A and a decrypt-SIC 16B pair. The decrypt-SIC 16B is suitable for decrypting data encrypted using the encrypt-SIC 16A. However, it is not possible to derive the encrypt-SIC 16A from the decrypt-SIC 16B.

### DIAGRAM 1C

| **First party** | **Second party** | **Trusted third party** |
|---|---|---|
| Identification data 12 | Identification data 12 | Identification data 12 |
| Authentication data 14 | Authentication data 14 | |
| Encrypt Secret Identification Code | | |
| (encrypt-SIC) 16A | | |
| Decrypt Secret Identification Code | | Decrypt Secret Identification Code |
| (decrypt-SIC) 16B | | (decrypt-SIC) 16B |
| SIC-certificate 18 | SIC-certificate 18 | SIC-certificate 18 |

During installation in accordance with the method illustrated in DIAGRAM 1A, the SIC 16 is generated in step 106. In the further embodiment, the SIC 16 may be generated as an encryption-decryption pair encrypt-SIC 16A and decrypt-SIC 16B in step 106. Thereafter, only the decrypt-SIC 16B is encrypted to generate an encrypted decrypt-SIC 24B in accordance with step 110 of DIAGRAM 1A. The encrypted decrypt-SIC 24B is provided to the trusted third party in accordance with step 112 of DIAGRAM 1A. The trusted third party thus obtains the decrypt-SIC 16B instead of the SIC 16 as shown in DIAGRAM 1A.

As a result, and as can be seen in DIAGRAM 1C, the encrypt-SIC 16A is only available to the first transaction party. Therefore, no party or combination of second and third parties is enabled to generate a valid encrypted digital signature.

DIAGRAM 2 illustrates a transaction method according to the present invention.

### DIAGRAM 2

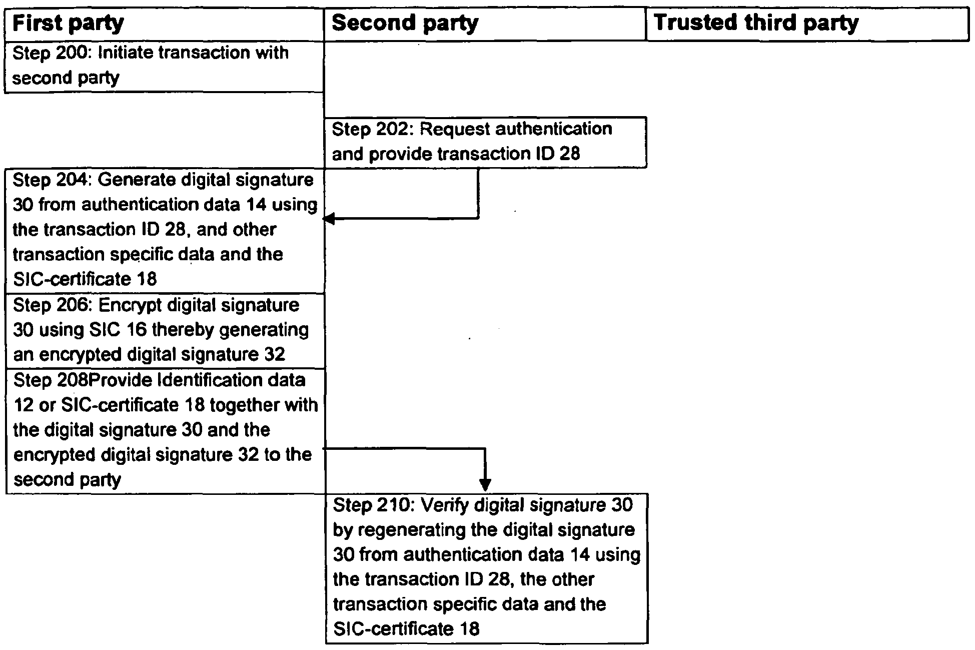

The first transaction party is presumed to initiate the transaction in step 200. However, the second transaction party may as well initiate the transaction. After initializing the transaction, a number of actions may be performed by any of the transaction parties. At some point of the transaction, e.g. when the second transaction party accepts the requested transaction, the second transaction party requests the first transaction party to provide an identification and provides a transaction identification number 28 to the first transaction party (step 202).

In response, the first transaction party starts the authentication software as provided in the installation method shown in DIAGRAM 1A. The authentication software is started to generate a digital signature 30 from the authentication data 14 as indicated as step 204. To generate a digital signature 30 from the authorization data 14, additional data is needed, e.g. the transaction identification number 28, a PIN or biometric template and the SIC-certificate 18, thereby tying the digital signature 30 to the transaction and to the first transaction party and/or to a specific authorized user. However, other data may as well be used.

In step 206, the generated digital signature 30 is encrypted using the SIC 16 or the SIC-encrypt 16A as an encryption key. Both the digital signature 30 and the encrypted digital signature 32 are provided to the second transaction party in step 208. In step 210, thereafter, the second transaction party may regenerate the digital signature 30 as the second party has all data available needed to do so (see DIAGRAM 1B or DIAGRAM 1C). Based on a comparison of the received digital signature 30 and the regenerated digital signature 30 the second transaction party may authenticate the first transaction party, the authorized user and/or the integrity of the transaction data.

The second transaction party cannot regenerate the encrypted digital signature 32, because the second transaction party does not have the SIC 16 or the encrypt-SIC 16A available. In any case, the second transaction party will store the data relating to the authentication and the transaction, *inter alia* including the received digital signature 30, the received encrypted digital signature 32, the transaction identification number 28, the SIC-certificate 18, the authorization data 14 and the identification data 12 to be used in case of a dispute. Thereafter, the transaction may be completed and a connection with the first transaction party may be ended.

DIAGRAM 3 illustrates a verification method according to the present invention. The verification may be performed during the transaction or it may only be performed when a dispute arises after completion of the transaction, for example if the first transaction party claims not to have performed the transaction.

### DIAGRAM 3

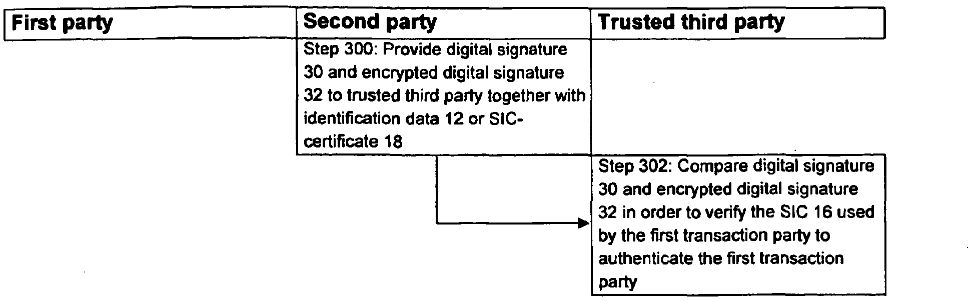

To verify the first transaction party, the second transaction party gathers data such as the received digital signature 30, the received encrypted digital signature 32 and the identification data 12 and/or the SIC-certificate 18. The data is provided to the trusted third party in a first step 300.

After receipt of the data, in step 302, the trusted third party verifies the first transaction party using the identification data 12 or the SIC-certificate 18 and gathers the data previously stored after the installation method as illustrated in DIAGRAM 1A. Since the trusted third party has the digital signature 30 and the SIC 16, the trusted third party may regenerate the encrypted digital signature 32 and compare it with the received encrypted digital signature 32, thereby practically comparing the SIC 16 stored at the trusted third party and the SIC 16 used by the first transaction party for encrypting the digital signature 30.

Likewise, the trusted third party may generate a decryption key corresponding the SIC 16 as an encryption key and decrypt the received encrypted digital signature 32 to obtain the digital signature 30. Then, the obtained digital signature 30 may be compared with the received digital signature 30. If the SIC 16 is divided in an encrypt-SIC 16A and a decrypt-SIC 16B as suggested in relation to DIAGRAM 1C, the trusted third party can of course only perform a decryption of the received encrypted digital signature 32 and verify the now decrypted digital signature 32 by comparison with the obtained digital signature 30.

From the above the person skilled in the art will readily understand how it is achieved that a session-specific and transaction-party-specific digital signature and encrypted digital signature may be generated such that only said first transaction party is enabled to generate said digital signature and encrypted digital signature. Therefore, afterwards or during the transaction, the first transaction may be identified beyond reasonable doubt. The method is described above in the light of the disclosures of WO 2004 111752 and is particularly suitable to be combined with the methods and systems described therein. However, the method according to the present invention may as well be used in combination with other transaction methods without departing from the scope of the invention as will be understood by the person skilled in the art.

## Claims

1. Method for enabling verification and authentication of a first transaction party of an electronic transaction with a second transaction party, the method comprising installing an electronic device of said first transaction party, the method comprising:
■ providing authentication data in a first memory section of said electronic device such that the authentication data are inaccessible to a user of said electronic device;
■ the second transaction party providing public identification data in a second memory section of said electronic device;
■ generating a secret identification code, SIC, in the electronic device of the first transaction party;
■ storing the SIC in a third memory section of said electronic device such that the SIC is inaccessible to a user of said electronic device;
■ the second transaction party providing the authentication software to said electronic device, the authentication data and the SIC being accessible to said authentication software;
■ generating a SIC-certificate by encrypting the SIC in the electronic device of the first transaction party;
■ generating a session encryption key from the authentication data using session specific data in the electronic device of the first transaction party;
■ providing the SIC-certificate and at least one of the session encryption key and the session specific data to the second transaction party;
■ the second transaction party storing the public identification data, the SIC-certificate and said at least one of the session encryption key and the session specific data together with the authentication data;
■ encrypting the SIC using the session encryption key thereby generating an encrypted SIC in the electronic device of the first transaction party;
■ providing at least the SIC-certificate and the encrypted SIC to a trusted third party.

2. Method according to claim 1, wherein providing the authentication data in a memory of said electronic device comprises generating the authentication data and storing the authentication data in a secure memory location, inaccessible to the user, the method further comprising providing the authentication data to the second transaction party.

3. Method according to claim 1 or 2, wherein the method further comprises:
■ the second transaction party regenerating the session encryption key, if the session specific data were provided;
■ generating a session decryption key corresponding to the session encryption key and providing the session decryption key to the trusted third party;
■ the trusted third party decrypting the encrypted SIC, thereby obtaining the SIC;
■ the trusted third party storing the SIC together with the SIC-certificate.

4. Method according to any of the preceding claims, wherein the SIC comprises an encrypt-SIC and a corresponding decrypt-SIC, the decrypt-SIC being encrypted using the session encryption key and being provided to the trusted third party together with the SIC-certificate.

5. Method for performing an electronic transaction between a first transaction party and a second transaction party, both transaction parties being enabled in accordance with the method according to any of the preceding claims, the method comprising:
■ activating the authentication software to generate a digital signature from the authentication data;
■ encrypting the digital signature using the SIC as an encryption key thereby generating an encrypted digital signature;
■ providing the digital signature and the encrypted digital signature to the second transaction party.

6. Method for performing an electronic transaction between a first transaction party and a second transaction party, both transaction parties being enabled in accordance with the method according to claim 4, the method comprising:
■ activating the authentication software to generate a digital signature from the authentication data;
■ encrypting the digital signature using the encrypt-SIC as an encryption key thereby generating an encrypted digital signature;
■ providing the digital signature and the encrypted digital signature to the second transaction party.

7. Method for verifying a first transaction party having performed an electronic transaction in accordance with the method according to claim 5, the method comprising:
■ the second transaction party providing the SIC-certificate, the digital signature and the encrypted digital signature, received during the electronic transaction, to the trusted third party; and
■ the trusted third party looking up the SIC corresponding to the SIC-certificate and comparing the digital signature and the encrypted digital signature using said SIC.

8. Method for verifying a first transaction party having performed an electronic transaction in accordance with the method according to claim 6, the method comprising:
■ the second transaction party providing the SIC-certificate, the digital signature and the encrypted digital signature, received during the electronic transaction, to the trusted third party; and
■ the trusted third party looking up the decrypt-SIC corresponding to the SIC-certificate and comparing the digital signature and the encrypted digital signature using said decrypt-SIC.

9. Method according to claim 7 or 8, the method comprising:
■ the second transaction party regenerating the session encryption key, if the session specific data were provided;
■ generating a session decryption key corresponding to the session encryption key and providing the session decryption key to the trusted third party;
■ the trusted third party decrypting the provided one of the encrypted SIC and the encrypted decrypt-SIC, thereby obtaining one of the SIC and the decrypt-SIC.

## Patentansprüche

1. Verfahren zur Verifikation und zur Authentifizierung von einem ersten Transaktionsbeteiligten einer elektronischen Transaktion mit einem zweiten Transaktionsbeteiligten, wobei das Verfahren das Installieren einer elektronischen Vorrichtung des ersten Transaktionsbeteiligten umfasst und darüber hinaus aufweist:
- ein zur Verfügungstellen von Authentifizierungsdaten in einem ersten Speicherbereich der genannten elektronischen Vorrichtung, so dass die Authentifizierungsdaten unzugänglich sind für einen Benutzer der genannten elektronischen Vorrichtung;
- ein zur Verfügungstellen durch den zweiten Transaktionsbeteiligten von öffentlichen Identifizierungsdaten in einem zweiten Speicherbereich der genannten elektronischen Vorrichtung;
- eine Erzeugung eines geheimen Identifikations-Code, SIC, in der elektronischen Vorrichtung des ersten Transaktionsbeteiligten;
- Speicherung des SIC in einem dritten Speicherbereich der genannten elektronischen Vorrichtung, so dass der SIC unzugänglich für einen Benutzer der genannten elektronischen Vorrichtung ist;
- ein zur Verfügungstellen durch den zweiten Transaktionsbeteiligten von der Authentifizierungssoftware für die genannte elektronische Vorrichtung, wobei die Authentifizierungsdaten und der SIC zugänglich sind für die genannte Authentifizierungssoftware;
- Erzeugung eines SIC-Zertifikats durch Verschlüsselung des SIC in der elektronischen Vorrichtung des ersten Transaktionsbeteiligten;
- Erzeugen eines Sessionverschlüsselungsschlüssels aus den Authentifizierungsdaten durch Nutzung von sessionspezifischen Daten in der elektronischen Vorrichtung des ersten Transaktionsbeteiligten;
- Bereitstellen des SIC-Zertifikats und zumindest einen der Sessionverschlüsselungsschlüssels und der sessionspezifischen Daten in der elektronischen Vorrichtung für den zweiten Transaktionsbeteiligten;
- Speicheren durch den zweiten Transaktionsbeteiligten von den öffentlichen Identifikationsdaten, dem SIC-Zertifikat und zumindest einen der Sessionverschlüsselungsschlüssel und die sessionspezifischen Daten zusammen mit den Authentifizierungsdaten;
- Verschlüsselung des SIC bei Nutzung des Sessionverschlüsselungsschlüssels, um dadurch einen verschlüsselten SIC in der elektronischen Vorrichtung des ersten Transaktionsbeteiligten zu erzeugen;
- ein zur Verfügungstellen von zumindest dem SIC-Zertifikat und dem verschlüsselten SIC zu einem gesicherten dritten Beteiligten.

2. Verfahren nach Anspruch 1, wobei zur Verfügungstellen von den Authentifizierungsdaten in einen Speicher der genannten elektronischen Vorrichtung das Erzeugen von Authentifizierungsdaten und Speichern der Authentifizierungsdaten in einem sicheren Speicher, für den Benutzer unzugänglich, umfasst, und wobei das Verfahren weiter das zur Verfügungstellen der Authentifizierungsdaten zum zweiten Transaktionsbeteiligten umfasst.

3. Verfahren nach Anspruch 1 oder 2, wobei das Verfahren weiter umfasst:
- der zweite Transaktionsbeteiligte regeneriert den Sessionverschlüsselungsschlüssel, wenn die sessionspezifischen Daten zur Verfügung gestellt wurden;
- das Erzeugen eines Sessionentschlüsselungsschlüssels, korrespondierend zu dem Sessionverschlüsselungsschlüssel, und die zur Verfügungstellung des Sessionentschlüsselungsschlüssels zu dem gesicherten dritten Beteiligten;
- der gesicherte dritte Beteiligte entschlüsselt den verschlüsselten SIC, wodurch den SIC erhalten wird;
- der gesicherte dritte Beteiligte speichert den SIC zusammen mit dem SIC-Zertifikat.

4. Verfahren nach einem der vorhergehenden Ansprüche, wobei der SIC einen Verschlüsselungs-SIC sowie einen korrespondierenden Entschlüsselungs-SIC umfasst, wobei der Entschlüsselungs-SIC wird verschlüsselt durch Nutzung des Sessionverschlüsselungsschlüssels und dem dritten Beteiligten zusammen mit der SIC-Zertifikat zur Verfügung wird gestellt.

5. Verfahren zur Durchführung einer elektronischen Transaktion zwischen einem ersten Transaktionsbeteiligten und einem zweiten Transaktionsbeteiligten, wobei beide Beteiligte gemäß dem Verfahren nach einem der vorhergehenden Ansprüche ermächtigt werden, wobei das Verfahren umfasst:
- Aktivierung der Authentifizierungssoftware, um eine digitale Signatur an Hand der Authentifizierungsdaten zu erzeugen;
- Verschlüsselung der digitalen Signatur durch Nutzung des SIC als Verschlüsselungsschlüssel, um dadurch eine verschlüsselte digitale Signatur zu erzeugen;
- zur Verfügungstellen der digitalen Signatur und der verschlüsselten digitalen Signatur zu dem zweiten Transaktionsbeteiligten.

6. Verfahren zur Durchführung einer elektrischen Transaktion zwischen einem ersten Transaktionsbeteiligten und einem zweiten Transaktionsbeteiligten, wobei beide Beteiligte ermächtigt sind gemäß dem Verfahren nach Anspruch 4, wobei das Verfahren weiter umfasst:
- Aktivierung der Authentifizierungssoftware, um eine digitale Signatur der Authentifizierungsdaten zu erzeugen;
- Verschlüsselung der digitalen Signatur durch Nutzung des Verschlüsselungs-SIC als Verschlüsselungsschlüssel, um dadurch eine verschlüsselte Signatur zu erzeugen;
- zur Verfügungstellen der digitalen Signatur und der verschlüsselten digitalen Signatur zu dem zweiten Transaktionsbeteiligten.

7. Verfahren zur Überprüfung eines ersten Transaktionsbeteiligten, der eine elektronische Transaktion gemäß dem Verfahren nach Anspruch 5 durchgeführt hat, wobei das Verfahren umfasst:
- der zweite Transaktionsbeteiligte stellt das SIC-Zertifikat, die digitale Signatur und die verschlüsselte digitale Signatur, erhalten während der elektronischen Transaktion, zur Verfügung des gesicherten dritten Beteiligten; und
- der gesicherte dritte Beteiligte sucht den SIC entsprechend des SIC-Zertifikats und vergleicht die digitale Signatur und die verschlüsselte digitale Signatur durch Nutzung des genannten SIC.

8. Verfahren zur Überprüfung eines ersten Transaktionsbeteiligten, welche eine elektronische Transaktion gemäß dem Verfahren nach Anspruch 6 durchgeführt hat, wobei das Verfahren umfasst:
- der zweite Transaktionsbeteiligte stellt das SIC-Zertifikat, die digitale Signatur und die verschlüsselte digitale Signatur, erhalten bei der elektronischen Transaktion, zur Verfügung des gesicherten dritten Beteiligten; und
- der gesicherte dritte Beteiligte sucht den Entschlüsselungs-SIC, korrespondierend zum SIC-Zertifikat, und vergleicht die digitale Signatur und die verschlüsselte digitale Signatur mit dem genannten Entschlüsselungs-SIC.

9. Verfahren nach Anspruch 7 oder 8, wobei das Verfahren umfasst:
- der zweite Transaktionsbeteiligte regeneriert den Sessionverschlüsselungsschlüssel, wenn die sessionspezifischen Daten zur Verfügung gestellt wurden;
- Generieren eines Sessionentschlüsselungsschlüssels, korrespondierend zum Sessionverschlüsselungsschlüssel, und zur Verfügungstellen des Sessionentschlüsselungsschlüssels zum gesicherten dritten Beteiligten;
- der gesicherte dritte Beteiligte entschlüsselt einen des weitergegebenen verschlüsselten SIC und den verschlüsselten Entschlüsselungs-SIC, wodurch einer des SIC und des Entschlüsselungs-SIC erhalten wird.

## Revendications

1. Procédé pour permettre la vérification et l'authentification d'une première partie de transaction d'une transaction électronique avec une deuxième partie de transaction, le procédé comprenant l'installation d'un dispositif électronique de ladite première partie de transaction, le procédé comprenant de :
. fournir des données d'authentification dans une première section de mémoire dudit dispositif électronique de sorte que les données d'authentification soient inaccessibles à un utilisateur dudit dispositif électronique ;
. fournir, par la deuxième partie de transaction, des données d'identification publiques dans une deuxième section de mémoire dudit dispositif électronique ;
. générer un code d'identification secret, SIC, dans le dispositif électronique de la première partie de transaction ;
. mémoriser le SIC dans une troisième section de mémoire dudit dispositif électronique de sorte que le SIC soit inaccessible à un utilisateur dudit dispositif électronique ;
. fournir, par la deuxième partie de transaction, le logiciel d'authentification audit dispositif électronique, les données d'authentification et le SIC étant accessibles audit logiciel d'authentification ;
. générer un certificat de SIC en chiffrant le SIC dans le dispositif électronique de la première partie de transaction ;
. générer une clé de chiffrement de session à partir des données d'authentification en utilisant des données spécifiques à la session dans le dispositif électronique de la première partie de transaction ;
. fournir le certificat de SIC et au moins l'une de la clé de chiffrement de session et des données spécifiques à la session à la deuxième partie de transaction ;
. mémoriser, par la deuxième partie de transaction, les données d'identification publiques, le certificat de SIC et ladite au moins une de la clé de chiffrement de session et des données spécifiques à la session avec les données d'authentification ,
. chiffrer le SIC en utilisant la clé de chiffrement de session, générant de ce fait un SIC chiffré dans le dispositif électronique de la première partie de transaction ;
. fournir au moins le certificat de SIC et le SIC chiffré à une troisième partie de confiance.

2. Procédé selon la revendication 1, dans lequel la fourniture des données d'authentification dans une mémoire dudit dispositif électronique comprend la génération des données d'authentification et la mémorisation des données d'authentification à un emplacement de mémoire sécurisé, inaccessible à l'utilisateur, le procédé comprenant en outre de fournir les données d'authentification à la deuxième partie de transaction.

3. Procédé selon la revendication 1 ou 2, dans lequel le procédé comprend en outre de :
. générer de nouveau, par la deuxième partie de transaction, la clé de chiffrement de session, si les données spécifiques à la session ont été fournies ;
. générer une clé de déchiffrement de session correspondant à la clé de chiffrement de session et fournir la clé de déchiffrement de session à la troisième partie de confiance ;
. déchiffrer, par la troisième partie de confiance, le SIC chiffré, obtenant de ce fait le SIC ;
. mémoriser, par la troisième partie de confiance, le SIC avec le certificat de SIC.

4. Procédé selon l'une quelconque des revendications précédentes, dans lequel le SIC comprend un SIC de chiffrement et un SIC de déchiffrement correspondant, le SIC de déchiffrement étant chiffré en utilisant la clé de chiffrement de session et étant fourni à la troisième partie de confiance avec le certificat de SIC.

5. Procédé pour effectuer une transaction électronique entre une première partie de transaction et une deuxième partie de transaction, les deux parties de transaction étant validées conformément au procédé selon l'une quelconque des revendications précédentes, le procédé comprenant de :
. activer le logiciel d'authentification pour générer une signature numérique à partir des données d'authentification ;
. chiffrer la signature numérique en utilisant le SIC en tant que clé de chiffrement, générant de ce fait une signature numérique chiffrée ;
. fournir la signature numérique et la signature numérique chiffrée à la deuxième partie de transaction.

6. Procédé pour effectuer une transaction électronique entre une première partie de transaction et une deuxième partie de transaction, les deux parties de transaction étant validées conformément au procédé selon la revendication 4, le procédé comprenant de :
. activer le logiciel d'authentification pour générer une signature numérique à partir des données d'authentification ;
. chiffrer la signature numérique en utilisant le SIC de chiffrement en tant que clé de chiffrement, générant de ce fait une signature numérique chiffrée ;
. fournir la signature numérique et la signature numérique chiffrée à la deuxième partie de transaction.

7. Procédé pour vérifier une première partie de transaction ayant effectué une transaction électronique conformément au procédé selon la revendication 5, le procédé comprenant que :
. la deuxième partie de transaction fournit le certificat de SIC, la signature numérique et la signature numérique chiffrée, reçus pendant la transaction électronique, à la troisième partie de confiance ; et
. la troisième partie de confiance recherche le SIC correspondant au certificat de SIC et compare la signature numérique et la signature numérique chiffrée en utilisant ledit SIC.

8. Procédé pour vérifier une première partie de transaction ayant effectué une transaction électronique conformément au procédé selon la revendication 6, le procédé comprenant que :
. la deuxième partie de transaction fournit le certificat de SIC, la signature numérique et la signature numérique chiffrée, reçus pendant la transaction électronique, à la troisième partie de confiance ; et
. la troisième partie de confiance recherche le SIC de déchiffrement correspondant au certificat de SIC et compare la signature numérique et la signature numérique chiffrée en utilisant ledit SIC de déchiffrement.

9. Procédé selon la revendication 7 ou 8, le procédé comprenant de :
. générer de nouveau, par la deuxième partie de transaction, la clé de chiffrement de session, si les données spécifiques à la session ont été fournies ;
. générer une clé de déchiffrement de session correspondant à la clé de chiffrement de session et fournir la clé de déchiffrement de session à la troisième partie de confiance ;
. déchiffrer, par la troisième partie de confiance, celui du SIC chiffré et du SIC de déchiffrement chiffré fourni, obtenant de ce fait l'un du SIC et du SIC de déchiffrement.
